# EUROPEAN PATENT APPLICATION

(11) **EP 4 765 737 A1**
(43) Date of publication of application: **24.06.2026**
(21) Application number: 25220716.2
(22) Date of filing: 04.12.2025
(51) Int. Cl.: H04L 9/40, H04L 47/20

(54) **ACCOUNTING FOR RESOURCE CONSTRAINTS WHEN ENFORCING POLICIES IN A NETWORK**

(30) Priority: 23.12.2024 US 202419000091
(71) Applicant: Arista Networks, Inc., Santa Clara, CA 95054 (US)
(72) Inventor: MITTAL, Anuraag, Santa Clara, CA, 95054 (US); KARKHANIS, Nitin Ravindra, Santa Clara, CA, 95054 (US)
(74) Representative: Hoffmann Eitle

(57) **Abstract**

Systems and methods for accounting for resource constraints at network elements when distributing policy enforcement in a network are disclosed. Embodiments may allow the distribution of enforcement of policies from firewalls to other network elements to allow the offloading of the enforcement of actions of those policies to network elements, while accounting for the different resources for enforcement of those policies that may be present at each of those network elements.

## Description

### BACKGROUND

Firewalls are important components of modern networks. This is the case at least because firewalls may play an integral part in the security infrastructure of such networks, acting as barriers between networks, or devices on those networks, by examining and controlling the flow of traffic in a network based on traffic control policies.

It is thus desirable to speed traffic traversing a network by increasing the speed at which such traffic control policies can be applied, and to reduce the computational burden placed on firewalls in a network in association with the application of traffic control policies. Simultaneously, it is also desirable to reduce the commensurate increase in traffic necessitated by the need to transfer such traffic from other network elements to the firewall in order to enforce those traffic control policies.

One possible approach to this problem is to enforce traffic control policies at other locations in a network; in other words to distribute enforcement of these traffic control policies across the network. One of the main issues with moving the enforcement of these policies to other elements in the network is that these network elements may be differently configured. The difference in configurations may result in differing abilities across network elements and, in particular, different abilities with respect to policy enforcement across these network elements. These differing abilities may impede the ability to distribute traffic control policies to network elements, or the enforcement of the traffic control policies at these differently configured network elements.

It is thus desirable to account for these different configurations when enforcing these traffic control policies in a network.

### BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIGURE 1 is a block diagram illustrating an example network topology.
FIGURE 2 is a block diagram illustrating an example logical depiction of utilizing distributed policy enforcement in a network.
FIGURE 3 is a block diagram illustrating an example network architecture for accounting for resource constraints when utilizing distributed policy enforcement in a network.
FIGURE 4 is a block diagram depicting an example network element adapted for accounting for resource constraints when utilizing distributed policy enforcement in a network.
FIGURE 5 is a flow diagram depicting a method for accounting for resource constraints when utilizing distributed policy enforcement in a network in some embodiments.

### DETAILED DESCRIPTION

Firewalls are important components of modern networks. This is the case at least because firewalls may play an integral part in the security infrastructure of such networks, acting as barriers between networks, or devices on those networks, by examining and controlling the flow of traffic in a network based on traffic control policies (also referred to interchangeably herein as traffic policies or just policies).

These firewalls can inspect individual packets of data as they traverse the network and apply particular traffic control policies based on the characteristics of the packets and the traffic control policies. Traffic control policies installed at a firewall thus define a set of matching data along with an action. Accordingly, when traffic (e.g., packets) arrives at network elements in the network, the network elements can redirect this traffic to a firewall. The firewall inspects traffic received from these network elements to determine if that traffic matches a traffic control policy installed at the firewall. The firewall can then enforce the corresponding action for any matched traffic control policies.

Oftentimes, traffic control policies may be defined in terms of data that can only be obtained through some form of packet inspection. Packet inspection, especially as it pertains to layer 4 (L4) and higher stateful inspection of traffic in a firewall, is, however, computationally expensive. These policies that require deep packet inspection, or maintain states of network flows, are thus usually implemented on software running on a dedicated firewall. These software based firewalls can implement complex policies and maintain a huge number of flows, albeit at a much slower speed than can be implemented in hardware.

It is thus desirable to speed traffic in a network by increasing the speed at which such traffic control policies can be applied and reduce the computational burden placed on firewalls in a network in association with the application of traffic control policies while simultaneously reducing the commensurate increase in traffic necessitated by the need to transfer such traffic from other network elements to the firewall in order to enforce those traffic control policies.

Accordingly, in some cases, the enforcement of (e.g., certain types of) traffic control policies have been pushed to other locations in a network, such as at network elements comprising the infrastructure of the network including network switches or the like. One of the issues with moving the enforcement of these policies to other elements in the network is that these network elements may be differently configured. In particular, these network elements may have different (e.g., hardware or software) resources (e.g., memory sizes, etc.). Thus, in some cases, the resources available on network elements to install and implement traffic control policies may be different. For example, a number of hardware resources may be involved in installing and implementing these policies at a network element (e.g., a network switch). These resources may include a content addressable memory (CAM) such as a Ternary CAM (TCAM) that may be utilized to match and enforce policies on a network element The size of these memories may differ across different network elements. For example, the TCAMs at different network elements may be of or have differing numbers or sizes of entries available. Thus, the number of policies that may be installed across these differently configured network elements may likewise differ. In general then, a discrepancy in the resources available at network elements may lead to a commensurate difference in the policies installed on, and enforced at, different network elements in a network.

Asymmetry between the policies installed (e.g., and therefore enforced) at different network elements in a network may cause a number of problems. In particular, the discrepancy between policies installed at different network elements may result in different traffic handling at different network elements. For instance, certain network elements at which certain policies are installed may apply those policies at the network element (e.g., when those policies are matched), while network elements at which those policies are not installed may apply other (e.g., lower priority) policies to which that traffic matches, or may redirect that traffic to a firewall. Because of the asymmetrical nature of policy installation and enforcement, the firewall may have incomplete information on such traffic, which may lead to the dropping of that traffic or undesirable handling or forwarding of that traffic.

This situation is exacerbated by the manner in which policy enforcement is implemented in many networks. Namely, in certain instances policy enforcement may be implemented only on the initial ingress of traffic from a source (e.g., host) external to the network. Thus, only a network element (e.g., switch) serving as an ingress point for that traffic may apply policies installed at that network element (e.g., policies may not be applied to traffic originating from within the network or return traffic). As can be seen then, if network elements have different policies installed thereon, such traffic policies may be inconsistently or arbitrarily applied. Moreover, the asymmetry between the policy configurations at network devices may lead to dropped traffic. As but one scenario, suppose a policy is applied at a first (e.g., ingress) network element and traffic is directly routed to a host attached to a second network element. When return traffic is received from that host at the second network element, if that second network element is not configured with a policy that applies to that traffic, the traffic may be redirected to a firewall. The firewall may, in turn, drop that traffic (e.g., because the firewall has no record of the initial traffic to that host). As can be seen, the asymmetry of policy configurations at network devices can lead to a whole range of undesirable scenarios.

Typically, to address these types of situations, policies (e.g., that were designated for enforcement at a network element or of the type that would be enforced at a network element) that could not be installed on any single network element in the network (e.g., because of resource constraints imposed by the network device) were rejected (e.g., the user was informed that this policy could not be enforced). This situation however, constrained the number or type of policies that could be installed (e.g., across network elements) based on the configuration of the least capable network element designated for policy enforcement in the network (e.g., the network device with the least number of applicable resources, such as TCAM space or the like).

It would thus be desirable to allow differently configured network elements to enforce traffic policies in a network topology without allowing such constraints to impact policy enforcement in the network. In particular, it would be desirable to allow enforcement of traffic policies desired by users seamlessly without respect to the differently configured network elements (e.g., the network elements with differing amounts of resources). This ability would allow users desiring to implement such traffic policies to be informed that such traffic policies will be implemented and thus such users may not receive notifications that such policies have been rejected or otherwise cannot be implemented or enforced (e.g., may not receive such notifications based on resource constrained network elements).

To those ends, among others, embodiments are directed to methods and systems for accounting for resource constraints of network elements in a network employing a (e.g., distributed) firewall that includes policy enforcement at those network elements. Embodiments may install and maintain a firewall traffic redirect policy at network elements responsible for enforcing traffic policies in a network. This firewall traffic redirect policy may be adapted to cause traffic not meeting any other traffic forwarding policy installed at the network element to be redirected to the firewall in the network. Moreover, the firewall traffic redirect policy may specify additional data (e.g., metadata) to send to the firewall in association with the traffic redirected to the firewall, such as segment or virtual routing and forwarding (VRF) data associated with the traffic.

In some embodiments, to ensure that the installed firewall traffic redirect policy only applies to traffic not meeting any other traffic forwarding policy at a network element, this firewall traffic redirect policy may be installed as a low or lowest priority policy at each network element, and be adapted to match any traffic received by the network element that does not meet (e.g., the matching criteria for the firewall traffic redirect policy may be matching criteria that is broad enough to match all traffic received by a network element in a network or all traffic associated with a segment, such as a VRF segment or instance, in a network).

To elaborate on certain of these embodiments, in many cases, traffic policies are installed at a network element according to a priority. In other words, each of the traffic policies to be installed at a network element may be assigned a priority. This priority may be a relative priority (e.g., relative to other traffic policies) or may be an overall priority (e.g., a high or low priority). This priority may, for example, be specified by a user when the user defines or otherwise specifies the traffic policy for enforcement within the network. The number of these policies that may be installed on a particular network element may, however, be constrained by the (e.g., hardware) resources available to store or implement those policies at a network element.

According to embodiments, therefore, to get around this constrained resources problem instead of installing the policies in the defined priority order (e.g., and possibly exhausting the resources of the network element before all policies are installed), embodiments may install a firewall redirect traffic policy as a low priority traffic policy adapted to redirect traffic to a firewall in the network. The remaining resources available at the network element may then be used to install the other traffic policies (e.g., with the highest priority policies being installed first and lower priority policies getting dropped in cases where the resources of the network element are exhausted before all the traffic policies are installed). By using these firewall redirect traffic policies embodiments may ensure that all policies defined by a user may be reinforced in a network despite resource disparities between the network elements by redirecting traffic to the firewall in certain instances, as the firewall may have the capacity to implement the full set of policies.

To illustrate in more detail, when these traffic policies are installed on a network element, a firewall redirect traffic policy may be installed (e.g., before any other traffic policy) as a lowest priority policy at the network element. The traffic policies can then be installed at the network element in order of priority (e.g., from highest to lowest) until either all the traffic policies are installed at the network element or the resources (e.g., hardware resources such as memory) of the network element used for installing the traffic policies are exhausted.

Alternatively, space may be reserved at the network element (e.g., in the hardware resources such as memory) for installing a firewall redirect traffic policy at the network element. The traffic management policies can then be installed at the network element in order of priority. In this instance, the firewall redirect traffic policy may be installed at the network element before, during or after the installation of the traffic management policies.

For example, in many cases, the traffic policies may be installed in a policy match hardware block at the network element such that the policy match hardware block may be utilized to store and match traffic policies at network elements. This policy match hardware block may be implemented using a TCAM or the like. Thus, when a packet is received at the network element, a set of packet match criteria may be determined based on the packet data (e.g., source IP, destination IP, etc.) and this packet match criteria used by the policy match hardware block to determine if any traffic policies match the packet and should thus be applied to the packet.

In some cases, these traffic policies may be installed as label (tag) based policies where a label is used to summarize (e.g., is associated with) a number of IP addresses/prefixes. In these embodiments, a label database may be stored at the network element. This label database may associate labels with the set of IP addresses or prefixes corresponding to that label. In these embodiments, when a packet is received at the network element a route lookup may be performed in the label database based on packet data to determine any labels associated with the packet. The labels generated by the route lookup along with any other packet match criteria may then be used to determine any traffic policies that match the packet. The result of a match to a traffic policy is a policy-specific action. Actions may include, for example, drop, count, permit, redirect to a firewall for additional inspection, redirect or forward to a monitoring node, etc.

As noted, a TCAM may be used to implement a policy match hardware block. These TCAMs may be limited in size, limiting the number of policies that may be installed in a policy matching hardware block at a network element. Moreover, TCAMs may be configured such that policies are prioritized (e.g., for matching) based on the order of their installation in the TCAM. Thus, a traffic policy installed before (or after) another traffic policy may have a higher (or lower) priority than that traffic policy. As such, when a policy match is performed using a TCAM if a packet matches multiple policies, the highest priority policy may "win". In other words, the action associated with the highest priority policy may be performed.

Embodiments may therefore reserve lowest priority entries in a TCAM of a policy match hardware block for a firewall redirect traffic policy adapted to redirect packets to the firewall (e.g., along with other additional data or metadata as desired, such as VRF data or the like). The firewall may be a software firewall which may have more resources for implementing all the traffic policies defined for the network. Specifically, space (e.g., one or more entries) in the TCAM may be reserved for this firewall redirect traffic policy. Other policies may be installed in the TCAM of the policy hardware match block in order of priority (e.g., from highest to lowest) until no more entries in the TCAM remain (e.g., the hardware resources have been exhausted at the network element).

In this manner, if a packet is received by the network element and that packet is matched to the firewall redirect traffic policy at that network element, that packet has (by definition) not matched any higher priority policies installed in the TCAM at that network element (e.g., because the firewall redirect traffic policy is the lowest priority policy installed in the TCAM). Here, the packet will be redirected to the firewall in the network (adapted to implement the full set of traffic management policies) for further processing. Accordingly, when the firewall receives that redirected packet, that packet may be evaluated against any traffic management policies implemented in the network that could not be installed at that network element. Consequently, the use of a low priority firewall redirect traffic policy installed in the policy match hardware block at a network element in combination with a firewall adapted to implement the set of traffic policies defined for the network will prevent traffic leakage in the network while still allowing the complete set of traffic policies to be implemented in the network without regard to the asymmetric configuration of network elements in the network.

It may be now useful to discuss more details regarding embodiments of a distributed firewall that may employ embodiments of such systems and methods for accounting for resource constraints in the context of policy enforcement in a network. As discussed, in modern network environments, firewalls are essential components of a network's security infrastructure, acting as barriers between trusted internal networks and untrusted external networks, such as the Internet. These firewalls enforce traffic control policies installed on the firewall by examining and controlling the flow of traffic based on these policies. As firewalls may inspect the contents of packets at the application layer, in certain cases firewalls can detect and block specific types of traffic based on application-level protocols, such as HTTP, FTP, or SMTP.

Certain implementations of firewalls may comprise a distributed firewall (e.g., a sharded or segmented firewall) such that a firewall may include one or more firewall instances. In a distributed firewall, a set (one or more) of firewall instances may cooperate to perform firewall functionality within the network. For example, a distributed firewall may be utilized in a network architecture that involves deploying multiple firewall instances to create separate zones within a network. Each firewall instance can, for example, serve as a barrier between different segments of the network, controlling the flow of traffic and enforcing security policies specific to each segment.

To illustrate in more detail, firewalls inspect individual packets of data as they traverse the network. Each packet contains information such as source and destination IP addresses, port numbers, or protocol types. Traffic control policies installed at the firewall define a set of matching data along with an action (e.g., such as permit or deny). The matching data used to define the policy can be based on various criteria associated with traffic, such as source and destination IP addresses (e.g., including ranges or prefixes), port numbers (or ranges), protocols (e.g., a layer 4 (L4) protocol), and even data related to specific applications or services.

Accordingly, when traffic (e.g., packets) arrives at network elements (e.g., devices, either physical or virtual) in the network, such as edge network elements (e.g., top of rack (TOR) switches or the like), the network element may redirect this traffic to the firewall. The firewall inspects traffic received from these network elements to determine if that traffic matches a traffic control policy installed at the firewall. Namely, the firewall may compare data obtained from, or associated with, a packet against the matching data of the installed policies to see if a policy is matched. The firewall can then enforce the corresponding action (e.g., permit or deny) for any matched policies.

Packet inspection, especially as it pertains to L4 and higher stateful inspection of traffic in a firewall, is, however, computationally expensive. Further, the firewall itself may be additionally burdened when traffic is redirected to the firewall, as the firewall may have to hairpin such traffic. As packet inspection at a firewall is computationally expensive and the need for inspection of traffic by a firewall may increase (e.g., east-west) traffic in a network because of the need to transmit such traffic from network elements to the firewall for inspection it may be desired to reduce the computation burden on these firewalls while also reducing the commensurate increase in traffic necessitated by the need to transfer such traffic from other network elements to the firewall in order to enforce the policies.

In many cases, certain network elements, such as network edge elements (e.g., TOR switches), may include hardware or software resources that are underutilized. Thus certain implementations of a firewall may, in certain cases, offload policy enforcement from a firewall to other network elements in the network while still maintaining the ability to enforce those policies at a firewall if need be. Thus, these firewalls may distribute traffic policy enforcement in a network by offloading enforcement of traffic policies from firewalls to other network elements, including network edge elements such as TOR switches or the like. Specifically, embodiments may distribute policies to network elements such that those policies may be installed on those network elements to allow the enforcement of policy actions for those policies on traffic at those network elements.

To illustrate in more detail, according to embodiments, policies may be installed at a firewall in a network. This firewall may comprise distributed functionality residing at one more logical or physical firewall instances in the network. The policies can be defined by users (e.g., administrators) of the network using an interface associated with network management such as that offered by a cloud based network management system. The policies are thus defined using a set of matching data along with an action (e.g., such as permit or deny). These defined policies may also be associated with a priority such that these policies are prioritized with respect to one another, or with respect to an overall priority hierarchy (e.g., high or low priority). These defined policies are installed on the firewall in the network. In the case where the firewall comprises multiple distributed firewall instances, each policy may be installed at one of the instances, multiple of the firewall instances, or all of the firewall instances of the firewall.

Using these installed policies, the firewall (e.g., each firewall instance) may make policy enforcement decisions (e.g., permit or deny) with respect to flows in the network. These policy enforcement decisions may result from applying these policies to traffic redirected to the firewall from network elements in the network (e.g., network edge devices). Moreover, certain (e.g., all, or a subset of) the set of policies may be provided to one or more network elements for installation at those network elements (e.g., network edge elements such as TOR switches or the like). The set of policies for installation at a network element (referred to as the network element policies) may be provided, for example, with their associated priorities.

Upon receiving the set of network element policies for installation, each network element may use a best effort to install the set of network element policies. For example, the set of network policies may be installed in order of priority (e.g., from highest to lowest) at the network element until the resources for policy installation or enforcement (e.g., a memory for storing or matching those policies) is exhausted.

In addition a portion of the resources at the network element used for policy installation or enforcement may be reserved for installation of a firewall redirect traffic policy (or such a firewall redirect traffic policy may be installed in those resources before the set of network element policies are installed). This firewall redirect traffic policy may be a catch all policy adapted to match all (or a certain subset of) traffic received at the network element, and may have an action adapted to redirect matching traffic to the firewall (e.g., one or more firewall instances associated with the firewall in the network). Moreover, this firewall redirect policy may be installed as the lowest priority policy at the network element.

Consequently, in embodiments a firewall in a network (e.g., one or more firewall instances) may be adapted to enforce a set of policies on traffic in the network, while one or more network elements in the network may each be adapted to enforce a set of network element policies (e.g., the set of network element policies are installed at the network device), where those set of network element policies may comprise the entirety of the set of policies or a subset of those policies. Additionally, it will be noted that different network elements may be adapted to enforce a different (or the same) set of network element policies, based on, for example, the hardware resource constraints of those network elements. For example, one network element having relatively greater hardware resources for policy enforcement or matching may have a relatively larger number of network element policies installed thereon while another network element having relatively fewer hardware resources for policy enforcement or matching may have a relatively fewer number of network element policies installed thereon. Each network element may also have a firewall redirect policy installed as the lowest priority policy at the network element.

Thus, if traffic is received by the network element and that traffic is matched to the firewall redirect traffic policy at that network element, that traffic has (by definition) not matched any network element policy installed at that network element (e.g., because the firewall redirect traffic policy is the lowest priority policy installed at the network element). When the traffic matches this firewall redirect traffic policy it will be redirected to the firewall (e.g., a firewall instance) in the network adapted to implement the full set of policies for further processing. Accordingly, when the firewall receives that redirected traffic that traffic may be evaluated against any policies implemented in the network that could not be installed at that network element.

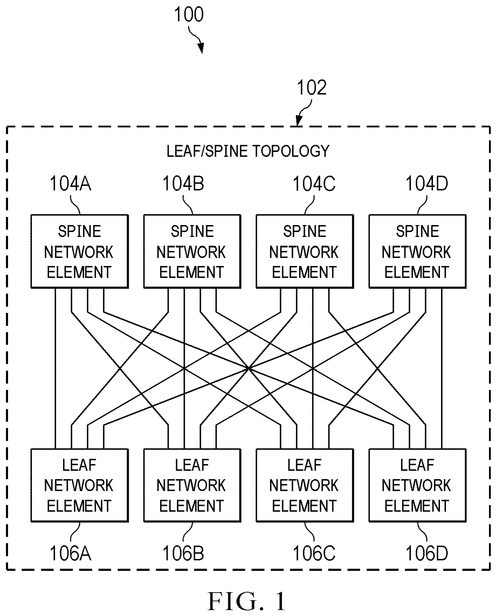

Initially, it may be helpful to an understanding of embodiments to discuss an example of a network architecture that may be useful in describing particular embodiments. Attention is thus directed now to FIGURE 1 which is an illustration of a network 100 having a leaf/spine topology 102 in which a set of spine network elements 104A-104D are coupled to a set of leaf network elements 106A-106D over a (e.g., multi-path) switching fabric. A leaf/spine topology 102 may be an alternate to a traditional three-layer core/aggregation/access network architecture. In certain cases, leaf network elements 106A-106D mesh into the spine network elements 104A-104D using a layer-3 (e.g., TCP/IP) protocol. Spine network elements 104A-104D usually provide the core data connections for the network, while the leaf network elements 106A-106D provide access to the network for host devices (e.g., servers, workstations, virtual machines).

Routes through the network 100 may be, for example, configured in an active state through the use of Equal-Cost Multi-pathing (ECMP), allowing all connections to be utilized while avoiding loops within the network 100. While leaf/spine network topologies as discussed with respect to FIGURE 1 may be used in describing embodiments herein, it will be understood that the use of such a leaf/spine topology in describing embodiment is for ease of description. Other embodiments may be utilized with equal efficacy in other network topologies and architecture. Additionally, while embodiments may be described in association with firewalls, the term firewall as utilized herein should be understood generally without limitation to refer to any element (physical or virtual) in a network that may be utilized to apply policies to control or otherwise manage traffic in a network.

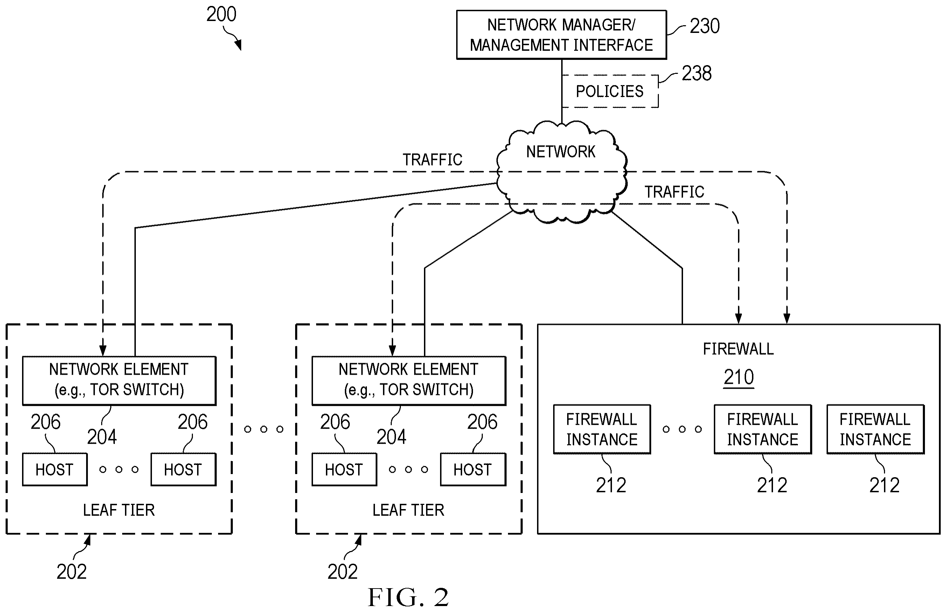

FIGURE 2 is a logical depiction of the use of a distributed firewall in a (e.g., leaf/spine) network 200 in association with the installation of traffic enforcement policies at a network element according to an embodiment. Here, a set of leaf tiers 202 may each include a network element 204 that may be TOR switches or the like connected to one or more hosts 206 (e.g., servers, etc.). Each of these network elements 204 may also be connected to firewall 210. Firewall 210 may comprise one or more firewall instances 212. For example, firewall 210 may comprise a distributed firewall (e.g., a sharded or segmented firewall) such that a firewall may include one or more firewall instances 212. In a distributed firewall, the set of firewall instances 212 may cooperate to perform firewall functionality within the network 200.

Policies 238 may be defined using a network manager comprising a management interface 230, which can be a cloud based network manager or the like. These policies 238 define a set of matching data along with an action (e.g., such as permit or deny). The matching data used to define the policy can be based on various criteria associated with traffic in network 200, such as source and destination IP addresses (e.g., including ranges or prefixes), port numbers (or ranges), protocols (e.g., a layer 4 (L4) protocol), and even data related to specific applications or services. These policies may also include a priority, where this priority may be a relative priority (e.g., relative to other policies 238) or may be an overall or atomic priority (e.g., a high or low priority).

Defined policies 238 may be configured and installed on firewall 210 (e.g., at particular instances 212 of firewall 210). These policies 238 may also be provided to network elements 204 for installation at these network elements 204 using a best effort installation process. For example, the set of network policies 328 may be installed in order of priority (e.g., from highest to lowest) at the network element 204 until the resources for policy installation or enforcement (e.g., a memory for storing or matching those policies) is exhausted. In addition a portion of the resources at the network element 204 used for policy installation or enforcement may be reserved for installation of a firewall redirect traffic policy (or such a firewall redirect traffic policy may be installed in those resources before the set of network element policies 328 are installed).

Accordingly, when traffic (e.g., packets) arrive at network element 204 the network element 204 inspects this received traffic to determine if that traffic matches a policy installed at the network element. Namely, the network element 204 may compare data obtained from, or associated with, a packet against the matching data of the installed policies to see if a policy is matched. Network element 204 may be configured such that policies are prioritized (e.g., for matching) based on the priority of those policies. As such, when a policy match is performed if a packet matches multiple policies, the highest action associated with the highest priority may be performed.

Consequently, if the traffic received by network element 204 matches to the firewall redirect traffic policy at that network element, that traffic will not have matched any network element policy installed at that network element (e.g., because the firewall redirect traffic policy is the lowest priority policy installed at the network element 204). When traffic does match this firewall redirect traffic policy it will be redirected to the firewall 210 (e.g., a firewall instance 212) in the network 200. Firewall 210 may be adapted to implement the full set of policies 238. The firewall 210 inspects traffic received from these network elements 204 to determine if that traffic matches a policy installed at the firewall 210. The firewall can then enforce the corresponding action (e.g., permit or deny) for any matched policies.

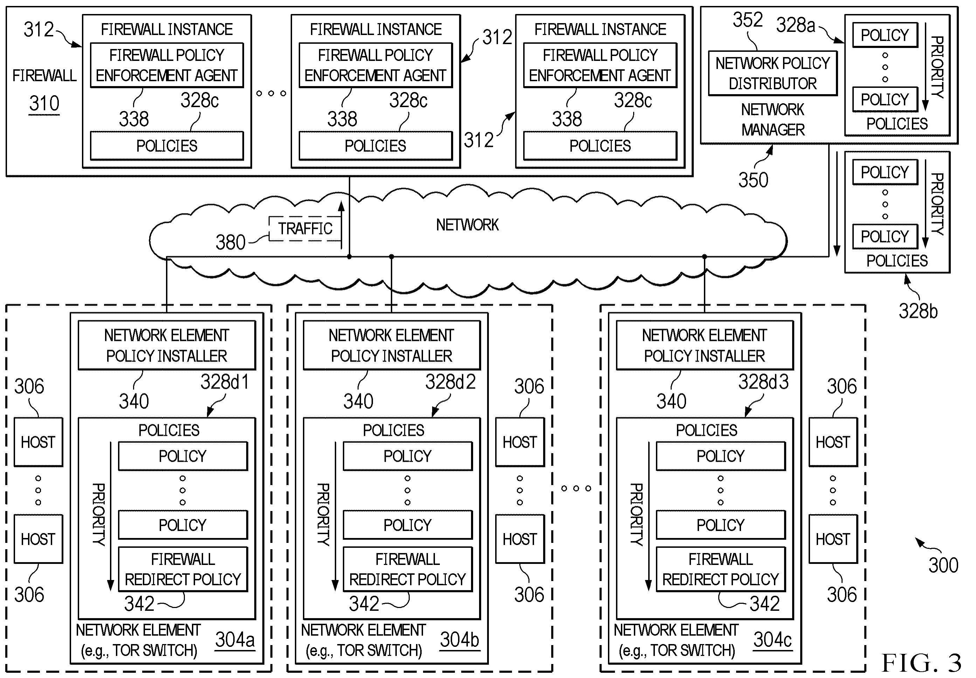

Looking now at FIGURE 3, a more detailed network architecture for one embodiment of accounting for resource constraints when enforcing policies in a network is depicted. Here, network system 300 may include firewall 310 comprising one or more firewall instances 312, where the firewall 310 may be coupled to one or more network elements 304 and each of those network elements 304 may be coupled to one or more hosts 306. For example, network system 300 can be implemented on a (e.g., layer-3) leaf/spine topology and includes a spine tier and a leaf tier, where each leaf tier includes one or more network elements 304. Each of the network elements 304 of a leaf tier can couple to one or more hosts 306.

A host 306 may include functionality to generate, receive, or transmit network traffic (e.g., packets or MAC frames). Examples of a host 306 include, but are not limited to, a server (e.g., a database server, a dynamic host configuration protocol (DHCP) server, an application server, a file server, a print server, a mail server, or any other server), a desktop computer, a mobile device (e.g., a laptop computer, a smartphone, a personal digital assistant (PDA), a tablet computer, or any other mobile device), or any other type of computing device. In one embodiment, each network element 304 can be configured as a TOR switch, although other configurations for these network elements 304 may be used in other embodiments (e.g., End of Row, etc.).

Policies 328a may be defined using a network manager 350 comprising a management interface, which can be a cloud based network manager or the like. These policies 328 define a set of matching data along with an action (e.g., such as permit or deny). These policies 328a may also include a priority, where this priority may be a relative priority (e.g., relative to other policies 328a) or may be an overall or atomic priority (e.g., a high or low priority).

Policies 328b may be provided from network manager 350 to firewall 310 (e.g., firewall instances 312) and network elements 304 for enforcement in network 300 (e.g., using a network policy distributor 352). Policies 328b may be the same set of policies 328a defined at network manager 350 or may be a subset of those policies 328a. Policies 328b may be provided by network manager 350 at certain (regular or irregular) intervals or based on other criteria, such as when new policies 328a are defined by a user, when a threshold number of new policies 328a are defined, etc.

When firewall 310 (e.g., firewall instances 312) receives these policies 328b from network manager 350 the firewall 310 (e.g., each firewall instance 312) may install these policies 328b at the firewall. For example, the policies 328b may be installed at each firewall instance 312. Thus, in one embodiment, the policies 328c installed at each firewall instance 312 may encompass the entire set of policies 328b distributed by network manager 350 for enforcement in the network. A firewall policy enforcement agent 338 at each firewall instance 312 may be adapted to match and apply these installed policies 328c to traffic 380 received at the firewall 310.

Policies 328b may also be provided from network manager 350 to network elements 304 for installation at these network elements 304 by network element policy installer 340 using a best effort installation process. For example, the set of network policies 328b may be installed in order of priority (e.g., from highest to lowest) at the network element 304 until the resources for policy installation or enforcement (e.g., a memory for storing or matching those policies) at network element 304 is exhausted. In addition a portion of the resources at the network element 304 used for policy installation or enforcement may be reserved for installation of a firewall redirect traffic policy 342 as the lowest priority policy at network element 304 (or such a firewall redirect traffic policy 342 may be installed in those resources before the set of network element policies 328d are installed).

As discussed, the resources available on network elements 304a, 304b, 304c to install and implement traffic control policies 328 may be different. For example, a number of hardware resources may be involved in installing and implementing these policies 328, such as a TCAM that may be utilized to match and enforce policies on a network element. The size of these hardware resources on network elements 304a, 304b, 304c may differ.

In general then, a discrepancy in the resources available at network elements 304 may lead to a commensurate difference in the policies 328d installed on, and enforced at, different network elements 304 in a network. As such, the set of policies 328d that may be installed across these differently configured network elements 304a, 304b, 304c may differ. Specifically, policies 328d1 installed at network element 304a, policies 328d2 installed at network element 304b and policies 328d3 installed at network element 304c may comprise the entirety of the set of policies 328b provided by network manager 350 or a subset of those policies 328b. Moreover, policies 328d1 installed at network element 304a, policies 328d2 installed at network element 304b and policies 328d3 installed at network element 304c may comprise the same, or different, (e.g., sub) set of policies 328b provided from network manager 350. All network elements 304 may, however, have firewall redirect traffic policy 342 installed thereon as a lowest priority policy.

As network 300 operates then, when traffic (e.g., packets) arrive at network elements 304, each network element 304 inspects this received traffic to determine if that traffic matches a policy 328d installed at the network element 304. Network element 304 may be configured such that policies are prioritized (e.g., for matching) based on the priority of the installed policies 328. As such, when a policy match is performed if a packet matches multiple policies 328d at a network element 304, the action associated with the highest priority policy 328d that matched may be performed.

Thus, if the traffic received by network element 304 does not match any other policy 328d installed at the network element 304, that traffic may match to firewall redirect traffic policy 342 at that network element 304 (e.g., that traffic will not have matched any other policy 328d installed at that network element 304 as the firewall redirect traffic policy is the lowest priority policy installed at the network element 304. Traffic 380 matching this firewall redirect traffic policy 342 may be redirected to firewall 310 (e.g., a firewall instance 312). Firewall policy enforcement agent 338 at each firewall instance 312 may be adapted to match and apply any applicable installed policies 328c to traffic 380 received at the firewall 310. As can be seen, the use of a low priority firewall redirect traffic policy 342 installed at network element 304 in combination with a firewall 310 adapted to implement the set of traffic policies 328b defined for the network 300 will prevent traffic leakage in the network 300 while still allowing the complete set of traffic policies 328b to be implemented in the network without regard to the asymmetric configuration of network elements 304 (and associated asymmetric policy 328d configurations) in the network 300.

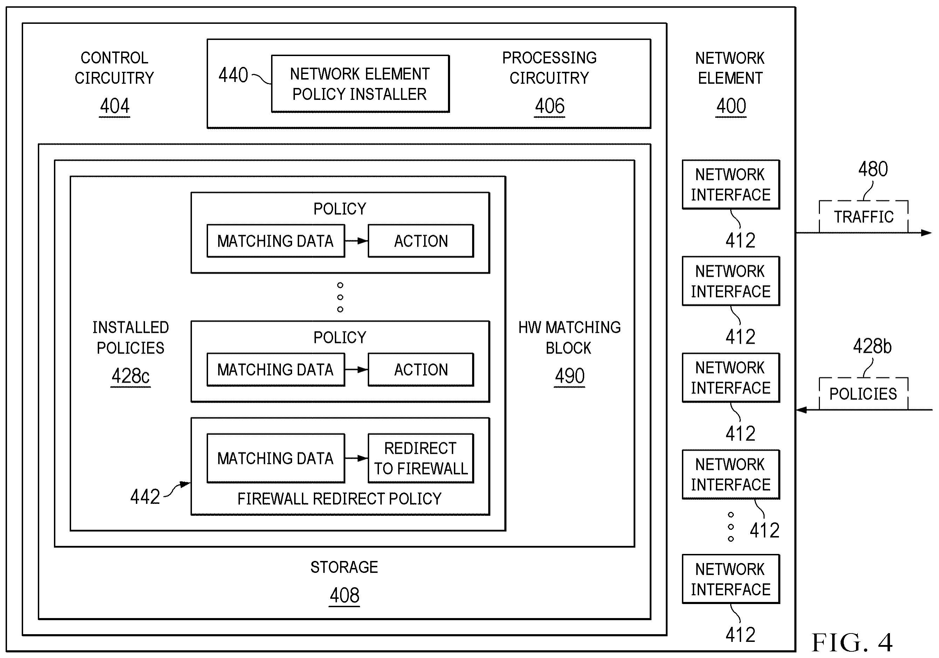

FIGURE 4 depicts one embodiment of a network element adapted for accounting for resource constraints when offloading policy enforcement in a network. Network element 400 may be a physical or virtual instance implemented on a computing device. Accordingly, network element 400 may receive data, including network traffic (e.g., packets or the like), via an input/output (I/O) path (not shown). This I/O path may provide traffic data to control circuitry 404, which includes processing circuitry 406 and storage (i.e., memory) 408. Control circuitry 404 may send and receive commands, requests, and other suitable data using the I/O path where the I/O path may connect control circuitry 404 (and specifically processing circuitry 406) to one or more network interfaces 412 to which other elements of a network (e.g., switches, routers, hosts, etc.) can be connected. These network interfaces 412 may be any type of network interface, such as an RJ45 ethernet port, a coaxial port, etc.

Control circuitry 404 includes processing circuitry 406 and storage 408. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quad-core, hexa-core, octa-core, or any suitable number of cores). In some embodiments, processing circuitry 406 is distributed across multiple separate processors or processing units, for example, multiple of the same type of processing units or multiple different processors. The circuitry described herein may execute instructions included in software running on one or more general purpose or specialized processors.

Storage 408 may be an electronic storage device that includes volatile random-access memory (RAM) which does not retain its contents when power is turned off, and non-volatile memory, which does retain its contents when power is turned off. As referred to herein, the phrase "electronic storage device" or "storage device" or "memory" should be understood to mean any device for storing electronic data, computer software, instructions, or firmware, such as RAM, ROM, a CAM or TCAM, hard drives, optical drives, solid state storage devices, quantum storage devices, or any other suitable fixed or removable storage devices, or any combination of the same.

Network element 400 is adapted to receive policies 428b for installation and enforcement at network 400. Each of these received policies 428b may be associated with a priority. Network element policy installer 440 can then install zero or more of these received policies 428b at the network element 400. Specifically, the one or more installed traffic policies 428c at network element 400 may be installed in a policy match hardware block 490 at the network element 400 such that the policy match hardware block 490 may be utilized to store and match installed traffic policies 428c at network element 400. This policy match hardware block 490 may be implemented using a TCAM or the like. In some embodiments, the TCAM utilized for policy match hardware block 490 may be configured such that policies are prioritized in policy match hardware block 490 (e.g., for matching) based on the order of their installation in the TCAM. Thus, a traffic policy installed before (or after) another traffic policy may have a higher (or lower) priority than that traffic policy.

Network element policy installer 440 may therefore reserve a lowest priority entry in a TCAM of policy match hardware block 490 for firewall redirect traffic policy 442 adapted to redirect traffic to a firewall (e.g., along with other additional data or metadata as desired, such as VRF data or the like). Specifically, space (e.g., one or more entries) in the TCAM may be reserved for this firewall redirect traffic policy 442 and this firewall redirect traffic policy 442 installed as the lowest priority entry in the TCAM of policy match hardware block 490. firewall redirect traffic policy 442 may be adapted to match any or a set of desired traffic received by the network element 400 (e.g., the matching criteria for the firewall traffic redirect policy 442 may be matching criteria that is broad enough to match all traffic received by a network element in a network or all traffic associated with a segment, such as a VRF segment or instance, in a network). The action associated with the firewall traffic redirect policy 442 may specify that the traffic is to be redirected to the firewall and what, if any, additional data is to be redirected along with that traffic (e.g., VRF data or the like).

In one embodiment, for example, a TCAM of policy match hardware block 490 may have multiple banks, where policies associated with a particular VRF may be installed in each bank of the TCAM. In this case, there may be a firewall traffic redirect policy 442 installed in each bank of the TCAM as the lowest priority policy of that bank, where that firewall traffic redirect policy 442 may be adapted to match all traffic for the VRF corresponding to that bank. In this manner, when traffic associated with that VRF or segment is received and criteria from that traffic is used to match policies in that bank of the TCAM, if no other policies in that bank are matched, the firewall traffic redirect policy 442 for that VRF installed in that bank of the TCAM may match that traffic and the traffic (e.g., and any additional data such as VRF data of the like) may be redirected to the firewall.

Network element policy installer 440 can then install received policies 428b in the TCAM of the policy hardware match block 490 in order of priority (e.g., from highest to lowest) until all of the received policies 428b are installed at the network element 400 or no more entries in the TCAM of the policy hardware match block 490 (or a particular bank of the TCAM) remain (e.g., policy hardware match block 490 is full or the hardware resources have otherwise been exhausted at the network element). It will be noted, the "full" in this context may mean that the entries or hardware resources of the policy match block 490 dedicated, or used for, policy enforcement may all be utilized (e.g., have policies installed therein). Thus, the set of policies 428c installed in the policy hardware match block 490 at network element 400 may include all of, or a subset of, the set of received policies 428b.

In some cases, these traffic policies 428c may be installed as label (tag) based policies where a label is used to summarize (e.g., is associated with) a number of IP addresses/prefixes for those policies. In these embodiments, a label database may be stored at network element 400. This label database may associate labels with the set of IP addresses or prefixes corresponding to that label. In these embodiments, when traffic is received at the network element 400 a route lookup may be performed in the label database based on packet data to determine any labels associated with the traffic. The labels generated by the route lookup along with any other packet match criteria may then be used to determine any traffic policies that match the traffic.

Thus, when traffic 480 is received at the network element, a set of packet match criteria may be determined based on the packet data (e.g., source IP, destination IP, etc.) of the traffic and this packet match criteria used by the policy match hardware block 490 to determine if any installed policies 428c match the traffic and should thus be applied to the traffic. if a packet is received by the network element and that packet is matched to the firewall redirect traffic policy at that network element, that packet has (by definition) not matched any higher priority rules installed in the TCAM at that network element (e.g., because the firewall redirect traffic policy is the lowest priority policy installed in the TCAM). Here, the packet will be redirected to the firewall in the network (adapted to implement the full set of traffic management policies) for further processing. Accordingly, when the firewall receives that redirected packet that packet may be evaluated against any traffic management policies 428b implemented in the network that could not be installed at that network element 400.

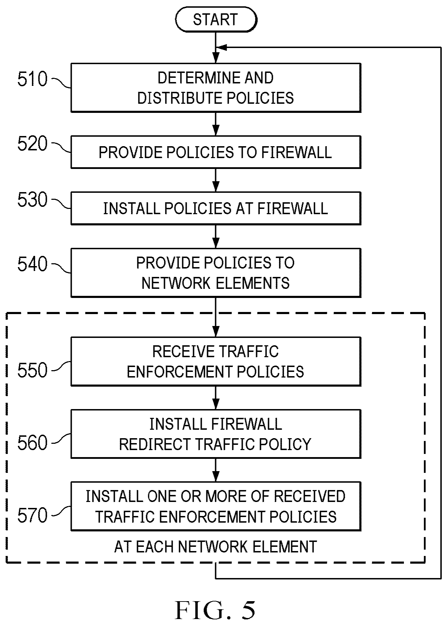

FIGURE 5 depicts one embodiment of a method for accounting for resources when distributing policy enforcement in a network. Initially (or at certain regular or irregular intervals, or upon the occurrence of an event), traffic enforcement policies (e.g., one or more traffic enforcement policies) may be determined and distributed in the network (STEP 510). As discussed, these traffic enforcement policies may be defined by a user using a network management system (e.g., a centralized or cloud based network manager or the like). These traffic enforcement policies may also be associated with a priority (e.g., be assigned a priority by a user or the network manager). The distribution of these traffic enforcement policies may comprise providing these traffic enforcement policies (e.g., from a network management system) to a firewall in the network (e.g., one or more firewall instances when the firewall is a distributed firewall) (STEP 520). The traffic enforcement policies can thus be installed at the firewall in the network such that the firewall is adapted to enforce these traffic enforcement policies (STEP 530).

These traffic enforcement policies may also be provided to one or more network elements (e.g., switches such as TOR switches) in the network (STEP 540). Thus, each network element may receive these traffic enforcement policies (STEP 550). A network element can install a firewall redirect traffic policy having an action adapted to redirect traffic to the firewall in a policy match block at the network element (STEP 560). This policy match block may be implemented in hardware and comprise a TCAM or the like. Thus, installing the firewall redirect traffic policy may comprise reserving an entry in the TCAM at the network element and installing the firewall redirect traffic policy in the reserved entry.

The network element can then install a set (e.g., one or more) of the received traffic enforcement policies in the policy match block at the network element (STEP 570). The traffic enforcement policies may be installed in the policy match block in order of the priority of the received traffic enforcement policies until the policy match block is full (e.g., the hardware resources of the policy match block are exhausted). Thus, the installed set of traffic enforcement policies may comprise all, or a subset of, the received traffic enforcement policies. Moreover, as network elements in the network may include different resources for policy match blocks (e.g., different hardware resources such as TCAMs with different amount of entries or blocks, etc.) the set of traffic enforcement policies installed on one network element in the network with one set of resources for policy enforcement (e.g., one size of TCAM) may be different than the set of traffic enforcement policies installed on another network element in the network with another set of resources for policy enforcement.

It will be understood that while specific embodiments have been presented herein, these embodiments are merely illustrative, and not restrictive. Rather, the description is intended to describe illustrative embodiments, features, and functions in order to provide an understanding of the embodiments without limiting the disclosure to any particularly described embodiment, feature, or function, including any such embodiment, feature, or function described. While specific embodiments of, and examples for, the embodiments are described herein for illustrative purposes only, various equivalent modifications are possible within the spirit and scope of the invention, as those skilled in the relevant art will recognize and appreciate.

As indicated, these modifications may be made in light of the foregoing description of illustrated embodiments and are to be included within the spirit and scope of the disclosure. Thus, while particular embodiments are described, a latitude of modification, various changes and substitutions are intended in the foregoing disclosures, and it will be appreciated that in some instances some features of embodiments of the invention will be employed without a corresponding use of other features, and features described with respect to one embodiment may be combined with features of other embodiments without departing from the scope and spirit of the disclosure as set forth.

The disclosure in the application also includes the following numbered clauses:
1. A method for policy enforcement in a network, comprising:
   receiving one or more traffic enforcement policies at a first network element;
   installing a firewall redirect traffic policy as a lowest priority policy in a first policy match block at the first network element, wherein the firewall redirect traffic policy comprises an action adapted to redirect traffic to a firewall in the network; and
   installing a first set of the traffic enforcement policies in the first policy match block at the first network element.
2. The method of clause 1, wherein the one or more traffic enforcement policies are associated with a priority.
3. The method of clause 2, wherein installing the first set of the traffic enforcement policies is done in order of the priority.
4. The method of clause 3, wherein installing the first set of traffic enforcement policies comprises installing the traffic enforcement policies in order of the priority until the first policy match block is full.
5. The method of any preceding clause, wherein the first policy match block is implemented in hardware.
6. The method of clause 5, wherein the hardware includes a ternary content addressable memory (TCAM).
7. The method of clause 6, wherein installing the firewall redirect traffic policy comprises reserving an entry in the TCAM at the first network element and installing the firewall redirect traffic policy in the reserved entry.
8. The method of clause 6, wherein the TCAM includes multiple banks and the firewall redirect traffic policy is installed as the lowest priority policy in each of the multiple banks.
9. The method of any preceding clause, wherein the firewall is a distributed firewall.
10. The method of any preceding clause, wherein the network element is a switch, preferably a top of rack (TOR) switch.
11. The method of any preceding clause, further comprising:
   receiving the one or more traffic enforcement policies at a second network element;
   installing the firewall redirect traffic policy as the lowest priority policy in a second policy match block at the second network element, wherein the firewall redirect traffic policy comprises the action adapted to redirect traffic to the firewall in the network; and
   installing a second set of the traffic enforcement policies in the second policy match block at the second network element.
12. The method of clause 11, wherein the second set of the traffic enforcement policies is different from the first set of traffic enforcement policies.
13. The method of clause 12, wherein the second policy match block comprises a different set of resources than the first policy match block.
14. A network element in a network, comprising:
   a policy match hardware block;
   at least one processor; and
   at least one non-transitory computer readable medium, comprising instructions to be executed by the at least one processor for:
      receiving one or more traffic enforcement policies, the one or more traffic policies associated with a priority;
      installing a firewall redirect traffic policy as a lowest priority policy in the policy match hardware block, wherein the firewall redirect traffic policy comprises an action adapted to redirect traffic to a firewall in the network; and
      installing the one or more traffic enforcement policies in the policy match hardware block in order of the priority until the policy match hardware block is full.
15. The network element of clause 14, wherein the policy match hardware block includes a ternary content addressable memory (TCAM).
16. The network element of clause 15, wherein installing the firewall redirect traffic policy comprises reserving an entry in the TCAM at the first network element and installing the firewall redirect traffic policy in the reserved entry.
17. The network element of any of clauses 14 to 16, wherein the network element is a top of rack (TOR) switch.
18. A system for distributed policy enforcement in a network, comprising:
   a firewall adapted to enforce one or more traffic enforcement policies; and
   a first network element, adapted to:
      receive the one or more traffic enforcement policies;
      install a firewall redirect traffic policy as a lowest priority policy at the first network element, wherein the firewall redirect traffic policy comprises an action adapted to redirect traffic to the firewall; and
      install a first set of the traffic enforcement policies at the first network element in order of the priority until a first resource for policy enforcement at the first network element is full.
19. The system of clause 18, further comprising:
   a second network element, adapted to:
   receive the one or more traffic enforcement policies;
   install the firewall redirect traffic policy as the lowest priority policy at the second network element; and
   install a second set of the traffic enforcement policies at the second network element in order of the priority until a second resource for policy enforcement at the second network element is full, wherein the first set of traffic enforcement policies is different than the second set of the traffic enforcement policies.
20. The system of clause 19, wherein the firewall is a distributed firewall comprising a plurality of firewall instances.

## Claims

1. A method for policy enforcement in a network, comprising:
receiving one or more traffic enforcement policies at a first network element;
installing a firewall redirect traffic policy as a lowest priority policy in a first policy match block at the first network element, wherein the firewall redirect traffic policy comprises an action adapted to redirect traffic to a firewall in the network; and
installing a first set of the traffic enforcement policies in the first policy match block at the first network element.

2. The method of claim 1, wherein the one or more traffic enforcement policies are associated with a priority.

3. The method of claim 2, wherein installing the first set of the traffic enforcement policies is done in order of the priority.

4. The method of claim 3, wherein installing the first set of traffic enforcement policies comprises installing the traffic enforcement policies in order of the priority until the first policy match block is full.

5. The method of any preceding claim, wherein the first policy match block is implemented in hardware.

6. The method of claim 5, wherein the hardware includes a ternary content addressable memory, TCAM.

7. The method of claim 6, wherein installing the firewall redirect traffic policy comprises reserving an entry in the TCAM at the first network element and installing the firewall redirect traffic policy in the reserved entry.

8. The method of claim 6, wherein the TCAM includes multiple banks and the firewall redirect traffic policy is installed as the lowest priority policy in each of the multiple banks.

9. The method of any preceding claim, wherein the firewall is a distributed firewall.

10. The method of any preceding claim, wherein the network element is a switch, preferably a top of rack, TOR, switch.

11. The method of any preceding claim, further comprising:
receiving the one or more traffic enforcement policies at a second network element;
installing the firewall redirect traffic policy as the lowest priority policy in a second policy match block at the second network element, wherein the firewall redirect traffic policy comprises the action adapted to redirect traffic to the firewall in the network; and
installing a second set of the traffic enforcement policies in the second policy match block at the second network element.

12. The method of claim 11, wherein the second set of the traffic enforcement policies is different from the first set of traffic enforcement policies.

13. The method of claim 12, wherein the second policy match block comprises a different set of resources than the first policy match block.

14. A network element in a network, comprising:
a policy match hardware block;
at least one processor; and
at least one non-transitory computer readable medium having instructions which, when executed by the at least one processor, cause the at least one processor to perform a method as set out in at least one of claims 1-10.

15. A system for distributed policy enforcement in a network, comprising:
a firewall adapted to enforce one or more traffic enforcement policies;
a network element according to claim 14; and
a second network element, adapted to:
receive the one or more traffic enforcement policies;
install the firewall redirect traffic policy as the lowest priority policy at the second network element; and
install a second set of the traffic enforcement policies at the second network element in order of the priority until a second resource for policy enforcement at the second network element is full, wherein the first set of traffic enforcement policies is different than the second set of the traffic enforcement policies.
